# FASCICULE DE BREVET EUROPEEN

(11) **EP 2 722 257 B1**
(45) Date de publication et mention de la délivrance du brevet: **21.10.2015**
(21) Numéro de dépôt: 13188805.9
(22) Date de dépôt: 16.10.2013
(51) Int. Cl.: B62D 25/08, B60K 13/02, B60H 1/28

(54) **Module d'auvent**
Wasserkastenmodul
Cowl module

(30) Priorité: 19.10.2012 FR 1260008
(43) Date de publication de la demande: 23.04.2014
(73) Titulaire: MECAPLAST, 98014 Monaco (MC)
(72) Inventeur: Peron, Benoît, 06320 Cap D'Ail (FR); Huguet, Guillaume, 01250 Chavannes Sur Suran (FR); Jandos, Emmanuel, 62410 Hulluch (FR)
(74) Mandataire: Delorme, Nicolas

(56) Documents cités:
- EP-A1- 0 694 453
- EP-A1- 1 029 721
- US-A- 5 501 716

## Description

La présente invention concerne un module d'auvent, destiné à être disposé entre un compartiment moteur et un habitacle d'un véhicule, notamment un véhicule automobile. Le document EP 1 029 721 A1 décrit un module d'auvent selon le préambule de la revendication 1.

L'admission d'air dans un véhicule comprend traditionnellement un filtre à air placé dans le compartiment moteur. Mais il est constaté que les autres éléments constituants le dispositif d'admission d'air ne sont généralement pas disposés de façon identique sous le capot moteur selon les constructeurs de véhicule ou selon la version de motorisation pour un même véhicule. Il est de ce fait peu optimal. En effet, le positionnement des éléments du dispositif est classiquement déterminé à la fin de la conception de l'architecture du compartiment moteur. Ceci conduit à placer les éléments selon les volumes restés libres sous le capot. Ainsi, la géométrie du filtre à air est souvent conçue afin de s'adapter à l'espace résiduel une fois tous les autres éléments situés sous le capot montés, de sorte qu'il présente une configuration, des accès et des cinématiques de montage rarement optimisés. Parfois même, le filtre à air est intégré dans la nappe de garde au capot prévue pour limiter l'impact des chocs avec un piéton. Cet agencement nécessite alors de concevoir le filtre (matière et géométrie) de sorte à minimiser sa raideur à l'écrasement pour la rendre acceptable, ou de recourir à des artifices tels que des fixations escamotables ou des zones de fragilité, ce qui est coûteux, en conception, en matériau et en temps d'installation. Par ailleurs, les tuyaux formant les conduits d'air, reliant les éléments du dispositif d'admission d'air, présentent souvent des formes complexes, non longilignes. De ce fait, ils s'étendent sur de grandes longueurs ce qui, en plus d'être coûteux, ne facilite pas l'installation et l'entretien des pièces sous-jacentes.

Il existe ainsi un besoin d'améliorer le dispositif d'admission d'air pour moteur afin de le rendre plus compact, moins difficile à monter, tout en réduisant les coûts de fabrication et de montage.

A cet effet et selon un premier aspect, l'invention a pour objet un module d'auvent destiné à être disposé entre un compartiment moteur d'un véhicule et un habitacle du véhicule, le module possédant une face frontale en regard du compartiment moteur et une face postérieure disposée en regard de l'habitacle, notamment pour un véhicule automobile, **caractérisé en ce que** le module d'auvent comporte un conduit d'admission d'air comprenant un orifice d'admission d'air disposé sur la périphérie du module d'auvent et un ensemble de filtration d'air primaire comprenant un élément filtrant primaire situé dans une chambre primaire de laquelle l'air filtré est canalisé vers un orifice de connexion primaire disposé sur la périphérie du module d'auvent, l'orifice de connexion primaire étant destiné à être relié à un système d'admission d'air du moteur.

Par l'expression 'véhicule automobile' on entend dans le présent document un véhicule automobile comprenant notamment un moteur à combustion interne, moteur hybride et moteur électrique avec générateur de charge de batterie.

Par l'expression 'compartiment moteur', il est entendu dans l'ensemble du document un compartiment situé sous le capot d'un véhicule et dans lequel est notamment disposé le moteur du véhicule.

Par l'expression 'système d'admission d'air du moteur' on entend dans le présent document un répartiteur.

Plus précisément, le module d'auvent est destiné à être disposé entre un compartiment moteur et une paroi tablier délimitant la face frontale de l'habitacle d'un véhicule. La paroi tablier ayant pour fonction de coupe-feu.

Ainsi, cette configuration permet d'utiliser un volume dans la région de l'auvent souvent laissée largement disponible pour constituer un module d'auvent dans lequel est réalisé la filtration de l'air destiné à alimenter le moteur qui est compact, simple à installer, et éloignée de sources chaudes de sorte que l'air fourni au moteur participe à son refroidissement, qui libère de la place autour du moteur de sorte à en faciliter l'accès. Par ailleurs, cette configuration permet de standardiser le dispositif d'admission d'air pour moteur. En effet, il est désormais possible d'utiliser un unique module d'auvent pour différentes catégories de motorisation d'un même véhicule. Lors de la conception de nouveaux modèles, les coûts de développement sont réduits. Il n'est plus nécessaire de repenser intégralement la conception et le positionnement du dispositif d'admission d'air, ce qui constitue un grand gain de temps et une réelle économie.

Avantageusement, le module d'auvent comprend également un ensemble de filtration d'air secondaire piqué sur le conduit d'admission d'air, l'ensemble de filtration d'air secondaire comprenant un élément filtrant secondaire situé dans une chambre secondaire de laquelle l'air filtré est canalisé vers un orifice de connexion secondaire disposé sur la face postérieure du module d'auvent, l'orifice de connexion secondaire étant destiné à être relié à un système d'admission d'air de l'habitacle. Cet agencement permet ainsi de rationaliser l'espace de la région de l'auvent. La mutualisation de l'orifice d'admission d'air et du conduit d'admission d'air permet un regroupement des fonctions dans un ensemble compact. De ce fait, le nombre de pièces est limité de sorte à obtenir des dispositifs d'admission d'air pour moteur et pour habitacle peu couteuses et offrant un gain en poids de matière utilisée. De plus, cette configuration du module d'auvent facilite l'assemblage sur la chaine de fabrication du véhicule et la maintenance des dispositifs d'admission et du moteur.

De préférence, le module d'auvent comprend au moins une coque formant au moins en partie le conduit d'admission d'air et/ou au moins en partie les ensembles de filtration d'air primaire et secondaire. Ainsi, il n'est pas nécessaire de prévoir des tuyaux formant un tube complet pour former le conduit d'admission et/ou les ensembles de filtration. Des tuyaux demi-cylindriques ou présentant d'autres formes, complémentaires de la coque suffisent alors, ce qui allège le poids du véhicule.

De façon avantageuse, l'élément filtrant primaire et/ou l'élément filtrant secondaire comprennent chacun une cuve dans laquelle respectivement un média filtrant primaire et un média filtrant secondaire sont disposés, chaque cuve étant refermée par un couvercle formé dans la face supérieure du module d'auvent. Ainsi l'entretien des média filtrant est facilité par un accès rapide au niveau de la face supérieure du module d'auvent. Il s'ensuit un gain de temps et une économie financière.

Selon une disposition de l'invention, la chambre primaire et la chambre secondaire entourent respectivement le média filtrant primaire et le média filtrant secondaire. Cette configuration permet d'éviter l'utilisation de tuyaux supplémentaires pour canaliser l'air filtré.

Selon une possibilité, l'orifice d'admission d'air est disposé sur une face latérale du module d'auvent. Cette disposition permet de prendre l'air au niveau de l'aile du véhicule de sorte qu'il est moins nécessaire de filtrer les feuilles, l'eau de pluie ou de la neige par comparaison à une prise d'air positionnée dans une grille d'auvent selon l'art antérieur.

Selon une variante de réalisation, l'orifice d'admission d'air est disposé sur une face frontale du module d'auvent. La prise d'air peut alors provenir d'un conduit étanche ou poreux, notamment formé entre la surface du capot et sa doublure.

Selon encore une autre variante, l'orifice d'admission d'air peut être situé sur la face supérieure du module d'auvent.

Selon une disposition particulière, l'orifice de connexion primaire est disposé sur la face frontale du module d'auvent. Ainsi, une simple durite souple permettra de relier l'orifice de connexion primaire au système d'admission d'air du moteur.

De préférence, l'orifice de connexion secondaire est disposé sur la face postérieure du module d'auvent. La connexion avec l'habitacle est ainsi facilitée.

Selon une autre disposition, l'orifice de connexion primaire est disposé sur la face inférieure du module d'auvent. Un moyen de connexion automatique permettant de connecter l'orifice de connexion primaire en aveugle, notamment par clipsage ou par collet à ressort, est alors prévu pour la liaison au système d'admission d'air du moteur.

Avantageusement, au moins une paroi périphérique du conduit d'admission d'air comprend au moins un moyen d'atténuation acoustique tel qu'un résonateur ou une chicane. Il est ainsi possible de mutualiser les écrans acoustiques pour les deux ensembles de filtration d'air.

De préférence, le module d'auvent est formé en un matériau thermoplastique. Ceci permet une fabrication simple par thermo-moulage conduisant à une rigidification des dispositifs d'admission d'air limitant ainsi les bruits de résonnance.

Le module d'auvent est formé d'au moins deux parties principales assemblées de façon au moins partiellement étanche entre elles. Le peu de pièces distinctes nécessaire pour fabriquer le module d'auvent rend son assemblage facile et rapide.

Selon une possibilité, le module d'auvent comprend également un boitier pour fusibles, un boitier pour batteries, un système d'essuie-glace et/ou des réservoirs notamment disposé de façon à former un moyen d'atténuation acoustique, tels qu'un réservoir de liquide pour lave-glace, un réservoir additionnel de liquide pour freins, un système de décantation de l'eau qui a été aspirée au niveau de l'orifice d'admission d'air. Ceci permet une grande rationalisation du module d'auvent et de gagner de la place dans le compartiment moteur tout en permettant un accès aisé à ces différents éléments pour un entretien rapide. De plus, la disposition judicieuse de ces éléments permettra de former une cloison acoustique entre les conduits d'admission d'air.

Selon une disposition, le module d'auvent assure également une fonction d'absorption des chocs piétons par la présence d'éléments sécables pouvant se rompre sous l'effet d'un choc sur l'avant du véhicule, permettant à différents composants du module de se déplacer et d'absorber au moins en partie le choc.

Selon un deuxième aspect, l'invention a pour objet un véhicule, notamment automobile, comprenant un compartiment moteur, un habitacle et un module d'auvent tel que précédemment décrit, disposé entre le compartiment moteur et l'habitacle. Un tel véhicule est moins couteux à concevoir et à fabriquer. Le moteur est plus facile d'accès et l'entretien des éléments prévus dans le module d'auvent est simplifié. Ce véhicule permet par ailleurs de conserver une plus grande nappe de garde au capot que celle de l'art antérieur.

D'autres aspects, buts et avantages de la présente invention apparaîtront mieux à la lecture de la description suivante d'un mode de réalisation de celle-ci, donnée à titre d'exemple non limitatif et faite en référence aux dessins annexés. Les figures ne respectent pas nécessairement l'échelle de tous les éléments représentés de sorte à améliorer leur lisibilité. Dans la suite de la description, par souci de simplification, des éléments identiques, similaires ou équivalents des différentes formes de réalisation portent les mêmes références numériques.
La figure 1 est une vue schématique d'un module d'auvent disposé entre une paroi tablier et un compartiment moteur d'un véhicule selon un mode de réalisation de l'invention.
La figure 2 est une vue en éclaté illustrant le module d'auvent selon un mode de réalisation de l'invention.
La figure 3 est une vue schématique en section horizontale d'un module d'auvent comprenant deux ensembles de filtration d'air selon un mode de réalisation de l'invention.
La figure 4 est une vue en éclaté d'un module d'auvent selon une variante de réalisation de l'invention.
La figure 5 est une vue schématique illustrant le module d'auvent représenté à la figure 4.
La figure 6 est une vue en perspective illustrant un conduit d'admission comportant des moyens d'atténuation acoustique selon un mode de réalisation de l'invention.

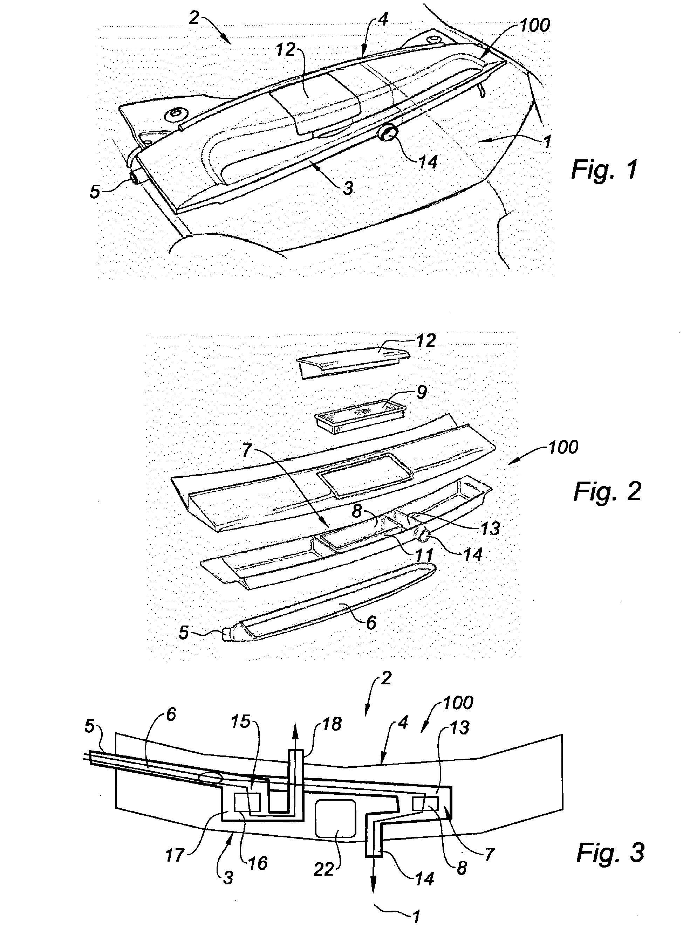

La figure 1 représente un module d'auvent 100 s'étendant transversalement sous un capot entre un compartiment moteur 1 et un habitacle 2 d'un véhicule. Une face frontale 3 du module d'auvent 100 est positionnée en regard du compartiment moteur 1 et une face postérieure 4 du module est disposée en regard de l'habitacle 2.

Dans le sens du cheminement de l'air ambiant provenant de l'extérieur du véhicule vers le moteur, le module d'auvent 100 comprend un orifice d'admission d'air 5 situé sur l'une des faces latérales du module 100. Cet orifice d'admission 5 permet de fournir l'air provenant de l'extérieur du véhicule, au module 100. Comme on peut le voir à la figure 2, le module d'auvent 100 comprend un conduit d'admission d'air 6 relié à l'orifice d'admission d'air 5 permettant de conduire l'air ambiant jusqu'à un ensemble de filtration d'air primaire 7 dans lequel l'air est filtré. En effet, comme illustré à la figure 2, l'ensemble de filtration 7 comporte un élément filtrant primaire 8 doté d'un média filtrant 9 logé dans une cuve 11 fermée par un couvercle 12. Le couvercle 12 est formé dans la face supérieure du module d'auvent 100 comme illustré à la figure 1, ce qui facilite l'entretien du média filtrant primaire 9. L'ensemble de filtration d'air primaire 7 comprend également une chambre primaire 13 (figure 2) entourant l'élément filtrant primaire 8, de sorte à récupérer l'air filtré et l'orienter vers un orifice de connexion primaire 14 disposé sur la face frontale 3 du module d'auvent 100 (figures 1 et 2). Cet orifice de connexion primaire 14 est destiné à être relié au système d'admission d'air du moteur par une simple durite (non illustrée). L'élément filtrant primaire 8 est choisi de sorte que l'air filtré satisfait les normes fixées pour l'air propre des moteurs.

Selon une variante de réalisation non illustrée, l'orifice d'admission d'air 5 peut être situé sur la face frontale 3 du module d'auvent 100. Dans ce cas, l'air extérieur peut être canalisé entre le capot et la peau inférieure du capot jusqu'à l'orifice d'admission d'air 5.

Selon une autre variante de réalisation non illustrée, l'orifice d'admission d'air 5 peut être situé sur la face supérieure du module d'auvent 100.

Selon encore une autre variante de réalisation non illustrée, l'orifice de connexion primaire 14 peut être prévu sur la face inférieure du module d'auvent 100. Dans ce cas, un autre type de connexion est prévu pour faire la liaison avec le système d'admission d'air du moteur.

Comme illustré à la figure 2, le module d'auvent 100 peut être formé de trois parties principales, par exemple réalisée en matériau thermoplastique, qui sont ensuite assemblées entre elles de façon partiellement étanche. Une portion, par exemple inférieure, du conduit d'admission d'air 6 et/ou une portion de l'ensemble de filtration d'air primaire 14, telle que la chambre primaire 13 peut être formée par la coque inférieure en matériau thermoplastique du module d'auvent 100. Ainsi le module 100 en matériau thermoplastique est rigidifié, ce qui contribue à réduire les bruits de résonnance. Ce module d'auvent permet par ailleurs de traiter les eaux de ruissellements, notamment provenant du pare-brise, ainsi que l'eau qui a été aspirée au niveau de l'orifice d'admission d'air 5 selon les méthodes traditionnelles.

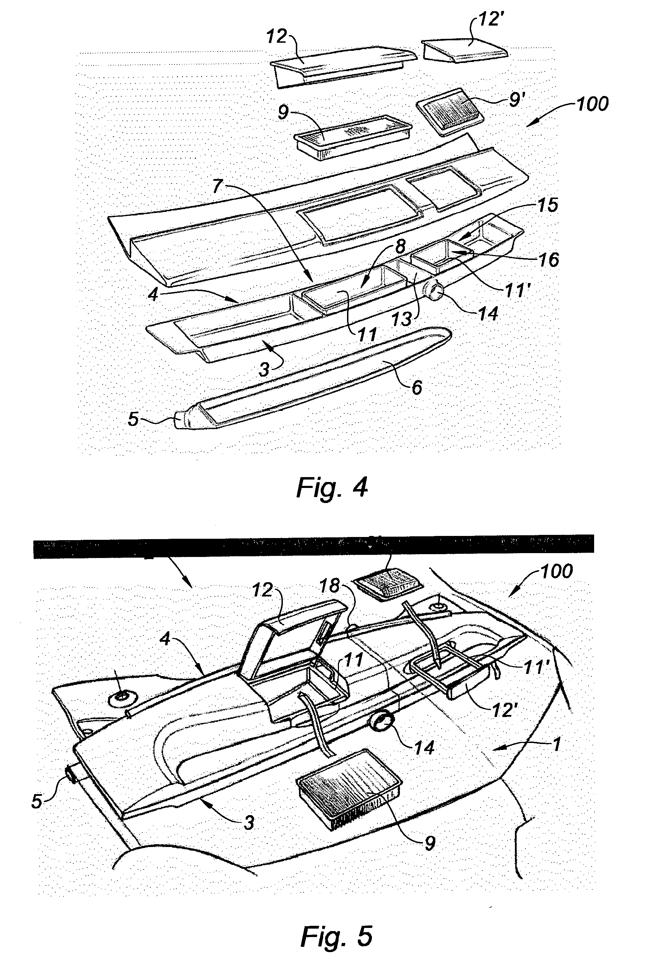

La figure 3 illustre selon une vue en section horizontale un module d'auvent 100 qui diffère de celui illustré aux figures 1 et 2 en ce qu'il comprend en outre un ensemble de filtration d'air secondaire 15 piqué sur le conduit d'admission d'air 6. Cet ensemble de filtration d'air secondaire 15 est destiné à fournir de l'air filtré à l'habitacle 2. Cet ensemble de filtration d'air secondaire 15 comprend un élément filtrant secondaire 16 (figure 4) adapté à filtrer les particules souhaitées, tels que les pollens et à fournir un air propre à l'habitacle 2, c'est à dire un air correspondant aux normes réglementaires pour habitacle, qui sont différentes de celles de l'air propre pour moteur. Les flèches représentées sur la figure 3 illustrent le trajet de l'air provenant de l'extérieur, pénétrant dans le module à partir de l'orifice d'admission d'air 5, circulant dans le conduit d'admission d'air 6 avant d'être séparé pour être filtré dans l'élément filtrant secondaire 16 et l'élément filtrant primaire 8. Comme on peut le voir aux figures 4 et 5, l'élément filtrant secondaire 16 comprend un média filtrant secondaire 9' disposé dans une cuve 11' refermée par un couvercle 12' formé dans la face supérieure du module d'auvent 100.

L'ensemble de filtration d'air secondaire 15 comprend également une chambre secondaire 17 amenant l'air filtré vers un orifice de connexion secondaire 18, prévu sur la face postérieure 4 du module d'auvent 100. Cet orifice de connexion secondaire 18 est ensuite destiné à être relié à un système d'admission d'air de l'habitacle 2. L'ensemble de filtration d'air primaire 7 est lui aussi connecté au conduit d'admission d'air 6. Ainsi, l'air ambiant arrive à l'élément filtrant primaire 8 puis à l'orifice de connexion primaire 14, disposé en partie frontale 3 du module d'auvent 100. Selon ce mode de réalisation, le conduit d'admission 6 est formé par des tuyaux.

Comme illustré à la figure 3, le module d'auvent 100 peut également comprendre un moyen d'atténuation acoustique, tel qu'un réservoir de liquide 22 et notamment un réservoir pour lave glace, permettant de réduire les nuisances sonores liées aux filtrations de l'air.

Ainsi, le rassemblement du dispositif d'admission d'air pour habitacle 2 et du dispositif d'admission d'air pour moteur dans un même module d'auvent 100 permet de gagner de l'espace dans le compartiment moteur 1 et permet également la mutualisation de certains moyens utilisés et donc une réduction des coûts de fabrication et d'installation. Par ailleurs, la face supérieure de ce module d'auvent 100 permet la canalisation des eaux de ruissellement, provenant notamment du pare-brise, vers l'extérieur du véhicule pour être évacuées.

Les figures 4 et 5 illustrent un module d'auvent 100 selon une variante de réalisation du module illustré à la figure 3. En effet, une partie du conduit d'admission d'air 6 et une partie des ensembles de filtration d'air 7;15 sont formées par la coque du module d'auvent 100.

Comme illustré à la figure 4, le conduit d'admission d'air 6, commun aux ensembles de filtration d'air primaire et secondaire 7 ; 15, s'étend longitudinalement dans le module d'auvent 100, lequel s'étend également selon toute la dimension latérale du sous-capot du moteur. Cette configuration évite la nécessité de coudes dans le conduit de sorte que la matière est économisée.

Comme illustré aux figures 4 et 5, le conduit d'admission d'air 6 comprend un orifice d'admission d'air 5 disposé sur une face latérale du module 100 de sorte à obtenir une prise d'air sur l'aile du véhicule. Le conduit d'admission d'air 6 est connecté à l'ensemble de filtration d'air primaire 7 pour alimenter le moteur en air propre puis le conduit d'admission se prolonge jusqu'à sa connexion à l'ensemble de filtration d'air secondaire 15 pour l'admission d'air propre dans l'habitacle 2. Les flèches de la figure 5 illustrent le positionnement respectivement des médias filtrants 9 et 9' dans les cuves 11 et 11' destinées à être refermées par les couvercles 12 et 12'. Dans cette disposition, un seul conduit d'admission 6 est nécessaire et la réduction du nombre de coudes dans celui-ci optimise sa longueur totale et minimise les pertes de charge.

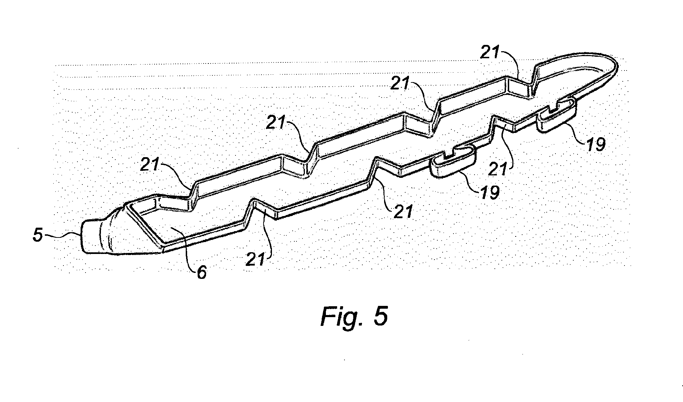

La figure 6 illustre un conduit d'admission d'air 6 comprenant des moyens d'atténuation acoustiques constitués par des chicanes 21 formées par les faces latérales du module d'auvent 100 ou des résonateurs 19, présentant par exemple une forme de haricot, à la périphérie des faces latérales du module 100. Ces moyens d'atténuation acoustiques 19 ; 21 permettent ainsi d'amortir les vibrations acoustiques liées à la circulation de l'air dans le module d'auvent 100.

Ainsi, la présente invention propose un module d'auvent 100 permettant de positionner de façon fiable et optimale un dispositif d'admission d'air pour le moteur d'un véhicule qui offre une possibilité de standardisation pour un modèle de véhicule doté des différentes motorisations tout en permettant d'assurer des fonctions d'étanchéité entre le pare-brise du véhicule et le capot. Par ailleurs, le module d'auvent 100 peut également comprendre un ensemble de filtration d'air secondaire 15 pour l'admission d'air propre dans l'habitacle 2 relié à un conduit d'admission d'air 6 mutuel.

La présente invention propose également un véhicule à moteur comportant un module d'auvent 100 tel que précédemment décrit.

## Revendications

1. Module d'auvent (100), notamment pour un véhicule automobile, destiné à être disposé entre un compartiment moteur (1) d'un véhicule et un habitacle (2) du véhicule, le module possédant une face frontale (3) en regard du compartiment moteur (1) et une face postérieure (4) disposée en regard de l'habitacle (2), **caractérisé en ce que** le module d'auvent (100) comporte un conduit d'admission d'air (6) comprenant un orifice d'admission d'air (5) disposé sur la périphérie du module d'auvent (100) et un ensemble de filtration d'air primaire (7), connecté au conduit d'admission d'air (6), comprenant un élément filtrant primaire (8) situé dans une chambre primaire (13) de laquelle l'air filtré est canalisé vers un orifice de connexion primaire (14) disposé sur la périphérie du module d'auvent (100), l'orifice de connexion primaire (14) étant destiné à être relié à un système d'admission d'air du moteur.

2. Module d'auvent (100) selon la revendication 1, **caractérisé en ce que** le module comprend également un ensemble de filtration d'air secondaire (15) piqué sur le conduit d'admission d'air (6), l'ensemble de filtration d'air secondaire (15) comprenant un élément filtrant secondaire (16) situé dans une chambre secondaire (17) de laquelle l'air filtré est canalisé vers un orifice de connexion secondaire (18) disposé sur la face postérieure du module d'auvent (100), l'orifice de connexion secondaire (18) étant destiné à être relié à un système d'admission d'air de l'habitacle (2).

3. Module d'auvent (100) selon l'une des revendications 1 à 2, **caractérisé en ce que** l'orifice d'admission d'air (5) est disposé sur une face latérale du module d'auvent (100).

4. Module d'auvent (100) selon l'une des revendications 1 à 2, **caractérisé en ce que** l'orifice d'admission d'air (5) est situé sur la face supérieure du module d'auvent (100).

5. Module d'auvent (100) selon l'une des revendications 1 à 4, **caractérisé en ce que** l'orifice de connexion primaire (14) est disposé sur la face frontale (3) du module d'auvent (100).

6. Module d'auvent (100) selon la revendication 2, **caractérisé en ce que** l'orifice de connexion secondaire (18) est dispose sur la face postérieure (4) du module d'auvent (100).

7. Module d'auvent (100) selon la revendication 2, **caractérisé en ce que** le module d'auvent (100) comprend au moins une coque formant au moins en partie le conduit d'admission d'air (6) et/ou au moins en partie les ensembles de filtration d'air primaire et secondaire (7 ;15).

8. Module d'auvent (100) selon la revendication 2, **caractérisé en ce que** l'élément filtrant primaire (8) et/ou l'élément filtrant secondaire (16) comprennent chacun une cuve (11, 11') dans laquelle respectivement un média filtrant primaire (9) et un média filtrant secondaire (9') sont disposés, chaque cuve (11,11') étant refermée par un couvercle (12;12') formé dans la face supérieure du module d'auvent (100).

9. Module d'auvent (100) selon l'une des revendications 1 à 8, **caractérisé en ce qu'**au moins une paroi périphérique du conduit d'admission d'air (6) comprend au moins un moyen d'atténuation acoustique, tel qu'une chicane (21) ou un résonateur (19).

10. Module d'auvent (100) selon l'une des revendications 1 à 9, **caractérisé en ce que** le module d'auvent (100) est formé en un matériau thermoplastique.

11. Module d'auvent (100) selon l'une des revendications 1 à 10, **caractérisé en ce que** le module d'auvent (100) est formé d'au moins deux parties principales assemblées de façon au moins partiellement étanche entre elles.

12. Module d'auvent (100) selon l'une des revendications 1 à 11, **caractérisé en ce que** le module d'auvent (100) comprend également un boitier pour fusibles, un boitier pour batteries, un système d'essuie-glace et/ou des réservoirs (22) notamment disposé de façon à former un moyen d'atténuation acoustique, tels qu'un réservoir de liquide pour lave-glace, un réservoir additionnel de liquide pour freins, un système de décantation de l'eau qui a été aspirée au niveau de l'orifice d'admission d'air (5).

13. Véhicule, notamment automobile, comprenant un compartiment moteur (1), un habitacle (2) et un module d'auvent (100) selon l'une des revendications 1 à 12 disposé entre le compartiment moteur (1) et l'habitacle (2).

## Patentansprüche

1. Windlaufmodul (100), vor allem für ein Kraftfahrzeug, das dazu bestimmt ist, zwischen einem Motorraum (1) eines Fahrzeugs und einer Fahrgastzelle (2) des Fahrzeugs angeordnet zu werden, wobei das Modul eine Stirnseite (3) gegenüber dem Motorraum (1) und eine Rückseite (4) umfasst, die gegenüber der Fahrgastzelle (2) angeordnet ist, **dadurch gekennzeichnet, dass** das Windlaufmodul (100) einen Lufteinlasskanal (6) umfasst, der eine Lufteinlassöffnung (5) umfasst, die am Rand des Windlaufmoduls (100) angeordnet ist, und eine Primärluft-Filtereinheit (7), die mit dem Lufteinlasskanal (6) verbunden ist, ein Primärfilterelement (8) umfassend, das sich in einer Primärkammer (13) befindet, deren gefilterte Luft zu einer Primäranschlussöffnung (14) geleitet wird, die am Rand des Windlaufmoduls (100) angeordnet ist, wobei die Primäranschlussöffnung (14) dazu bestimmt ist, mit einem Lufteinlasssystem des Motors verbunden zu werden.

2. Windlaufmodul (100) nach Anspruch 1, **dadurch gekennzeichnet, dass** das Modul auch eine Sekundärluft-Filtereinheit (15) enthält, die am Lufteinlasskanal (6) angeschlossen ist, wobei die Sekundärluft-Filtereinheit (15) ein Sekundärfilterelement (16) umfasst, das sich in einer Sekundärkammer (17) befindet, deren gefilterte Luft zu einer Sekundäranschlussöffnung (18) geleitet wird, die an der Rückseite des Windlaufmoduls (100) angeordnet ist, wobei die Sekundäranschlussöffnung (18) dazu bestimmt ist, mit einem Lufteinlasssystem der Fahrgastzelle (2) verbunden zu werden.

3. Windlaufmodul (100) nach einem der Ansprüche 1 bis 2, **dadurch gekennzeichnet, dass** die Lufteinlassöffnung (5) an einer Seitenfläche des Windlaufmoduls (100) angeordnet ist.

4. Windlaufmodul (100) nach einem der Ansprüche 1 bis 2, **dadurch gekennzeichnet, dass** die Lufteinlassöffnung (5) an der Oberseite des Windlaufmoduls (100) angeordnet ist.

5. Windlaufmodul (100) nach einem der Ansprüche 1 bis 4, **dadurch gekennzeichnet, dass** die Primäranschlussöffnung (14) an der Stirnseite (3) des Windlaufmoduls (100) angeordnet ist.

6. Windlaufmodul (100) nach Anspruch 2, **dadurch gekennzeichnet, dass** die Sekundäranschlussöffnung (18) an der Rückseite (4) des Windlaufmoduls (100) angeordnet ist.

7. Windlaufmodul (100) nach Anspruch 2, **dadurch gekennzeichnet, dass** das Windlaufmodul (100) zumindest ein Gehäuse umfasst, das zumindest teilweise den Lufteinlasskanal (6) und/ oder zumindest teilweise die Primärluft-und die Sekundärluft-Filtereinheit (7; 15) bildet.

8. Windlaufmodul (100) nach Anspruch 2, **dadurch gekennzeichnet, dass** das Primärfilterelement (8) und/ oder das Sekundärfilterelement (16) jeweils ein Gefäß (11, 11') umfassen, in dem jeweils ein Primärfiltermedium (9) und ein Sekundärfiltermedium (9') angeordnet sind, wobei jedes Gefäß (11, 11') durch einen Deckel (12, 12') verschlossen ist, der an der Oberseite des Windlaufmoduls (100) gebildet wird.

9. Windlaufmodul (100) nach einem der Ansprüche 1 bis 8, **dadurch gekennzeichnet, dass** zumindest eine umlaufende Wand des Lufteinlasskanals (6) zumindest ein Mittel zur Schallisolierung, wie eine Ablenkplatte (21) oder einen Resonator (19) enthält.

10. Windlaufmodul (100) nach einem der Ansprüche 1 bis 9, **dadurch gekennzeichnet, dass** das Windlaufmodul (100) aus einem thermoplastischen Material gefertigt ist.

11. Windlaufmodul (100) nach einem der Ansprüche 1 bis 10, **dadurch gekennzeichnet, dass** das Windlaufmodul (100) aus zumindest zwei Hauptabschnitten gefertigt ist, die zumindest teilweise dicht zusammengesetzt sind.

12. Windlaufmodul (100) nach einem der Ansprüche 1 bis 11, **dadurch gekennzeichnet, dass** das Windlaufmodul (100) auch ein Gehäuse für Sicherungen, ein Gehäuse für Batterien, ein Scheibenwischersystem und/ oder Behälter (22) umfasst, die vor allem in der Art angeordnet sind, um ein Mittel zur Schallisolierung, wie einen Flüssigkeitstank für die Scheibenwaschanlage, einen Zusatzbehälter für Bremsflüssigkeit, ein Dekantiersystem für das Wasser zu bilden, das im Bereich der Lufteinlassöffnung (5) angesaugt worden ist.

13. Fahrzeug, vor allem ein Kraftfahrzeug, einen Motorraum (1), eine Fahrgastzelle (2) und ein Windlaufmodul (100) nach einem der Ansprüche 1 bis 12 umfassend, das zwischen dem Motorraum (1) und der Fahrgastzelle (2) angeordnet ist.

## Claims

1. A canopy module (100), in particular for a motor vehicle, intended to be disposed between a motor compartment (1) of a vehicle and a passenger compartment (2) of the vehicle, the module having a front face (3) facing the motor compartment (1) and a posterior face (4) disposed facing the passenger compartment (2), **characterized in that** the canopy module (100) includes an air inlet duct (6) comprising an air inlet orifice (5) disposed on the periphery of the canopy module (100) and a primary air filtering assembly (7), connected to the air inlet duct (6), comprising a primary filtering element (8) located in a primary chamber (13) from which the filtered air is channeled towards a primary connection orifice (14) disposed on the periphery of the canopy module (100), the primary connection orifice (14) being intended to be connected to an air inlet system of the motor.

2. The canopy module (100) according to claim 1, **characterized in that** the module also comprises a secondary air filtering assembly (15) tapped on the air inlet duct (6), the secondary air filtering assembly (15) comprising a secondary filtering element (16) located in a secondary chamber (17) from which the filtered air is channeled towards a secondary connection orifice (18) disposed on the posterior face of the canopy module (100), the secondary connection orifice (18) being intended to be connected to an air inlet system of the passenger compartment (2).

3. The canopy module (100) according to any of claims 1 to 2, **characterized in that** the air inlet orifice (5) is disposed on a lateral face of the canopy module (100).

4. The canopy module (100) according to any of claims 1 to 2, **characterized in that** the air inlet orifice (5) is located on the upper face of the canopy module (100).

5. The canopy module (100) according to any of claims 1 to 4, **characterized in that** the primary connection orifice (14) is disposed on the front face (3) of the canopy module (100).

6. The canopy module (100) according to claim 2 **characterized in that** the secondary connection orifice (18) is disposed on the posterior face (4) of the canopy module (100).

7. The canopy module (100) according to claim 2, **characterized in that** the canopy module (100) comprises at least a shell at least partly forming the air inlet duct (6) and/or at least partly the primary and secondary air filtering assemblies (7; 15).

8. The canopy module (100) according to claim 2, **characterized in that** the primary filtering element (8) and/or the secondary filtering element (16) each comprise a tank (11, 11') in which respectively a primary filtering medium (9) and a secondary filtering medium (9') are disposed, each tank (11, 11') being closed by a lid (12; 12') formed in the upper face of the canopy module (100).

9. The canopy module (100) according to any of claims 1 to 8, **characterized in that** at least one peripheral wall of the air inlet duct (6) comprises at least one sound attenuating means, such as a baffle (21) or a resonator (19).

10. The canopy module (100) according to any of claims 1 to 9, **characterized in that** the canopy module (100) is formed of a thermoplastic material.

11. The canopy module (100) according to any one of claims 1 to 10, **characterized in that** the canopy module (100) is formed of at least two main at least partially sealed assembled parts.

12. The canopy module (100) according to any of claims 1 to 11, **characterized in that** the canopy module (100) also comprises a fuse box, a battery box, a windshield wiper system and/or reservoirs (22) in particular disposed in such a manner as to form a sound attenuating means, such as a reservoir of liquid for windshield wipers, an additional reservoir of liquid for brakes, a water decantation system which has been sucked at the air inlet orifice (5).

13. A vehicle, in particular a motor vehicle, comprising a motor compartment (1), a passenger compartment (2) and a canopy module (100) according to any of claims 1 to 12 disposed between the motor compartment (1) and the passenger compartment (2).
